# EUROPEAN PATENT SPECIFICATION

(11) **EP 2 712 045 B1**
(45) Date of publication and mention of the grant of the patent: **17.05.2017**
(21) Application number: 13183390.7
(22) Date of filing: 06.09.2013
(51) Int. Cl.: H02J 7/00, H02J 9/04

(54) **Parallel charging and discharging of multiple lead acid batteries**
Paralleles Laden und Entladen von mehreren Bleisäurebatterien
Chargement et déchargement parallèle de plusieurs batteries plomb-acide

(30) Priority: 24.09.2012 GB 201217016; 22.10.2012 GB 201218930
(43) Date of publication of application: 26.03.2014
(73) Proprietor: Siemens AB, 17141 Solna (SE)
(72) Inventor: Collins, Brendan, Portmarnock Co. Dublin (IE); O'Neill, Paul, Clonsilla, Dublin 15 (IE)
(74) Representative: Maier, Daniel Oliver

(56) References cited:
- US-A- 5 003 244
- US-A- 5 229 705
- US-A1- 2010 148 728

## Description

In order to achieve a high capacity battery backed up power supply, it is necessary to use either a very large battery or multiple smaller batteries. Large lead acid batteries are heavy and difficult to handle so for many applications the use of multiple smaller batteries is a preferred solution.
Unfortunately the parallel charging and discharging of multiple batteries presents a number of technical problems, in particular the safety issues associated with potentially connecting batteries which have a mismatch in charge state.
By ensuring that all batteries are matched in age and type, paralleled batteries can be treated as one battery. This has several disadvantages including the necessity to replace all of the batteries in the case of failure of any single unit and the inability to "hot swap" batteries.
The invention provides methods and apparatus for safely handling both charging and discharging of paralleled batteries. By way of background explanation, the standard method for charging a single lead-acid battery will now be described.

Stage 1: Constant current - By controlling the charge voltage, the battery is charged at a constant current, which is typically set at 0.1× the maximum allowable charge current. As the battery charges, the charge voltage will rise in order to keep the charge current constant.

When the charge voltage reaches a maximum permissible charge voltage, the current will begin to drop. When the current falls below a predefined limit, this stage terminates.
Stage 2: Constant Voltage - Following the end of the constant current stage, a set charge voltage is maintained, typically at a level dependent on battery temperature. The present invention provides methods and apparatus for safely charging and discharging a number of batteries in parallel, as defined in the appended claims.

The above, and further, objects, characteristics and advantages of the present invention will become more apparent from the following description of certain embodiments thereof, in conjunction with the accompanying drawings, wherein:
Fig. 1 shows a battery charging circuit according to the present invention; and
Fig. 2 shows a battery back-up circuit which includes a battery discharge circuit according to an embodiment of the invention.

### Charging of multiple batteries in parallel

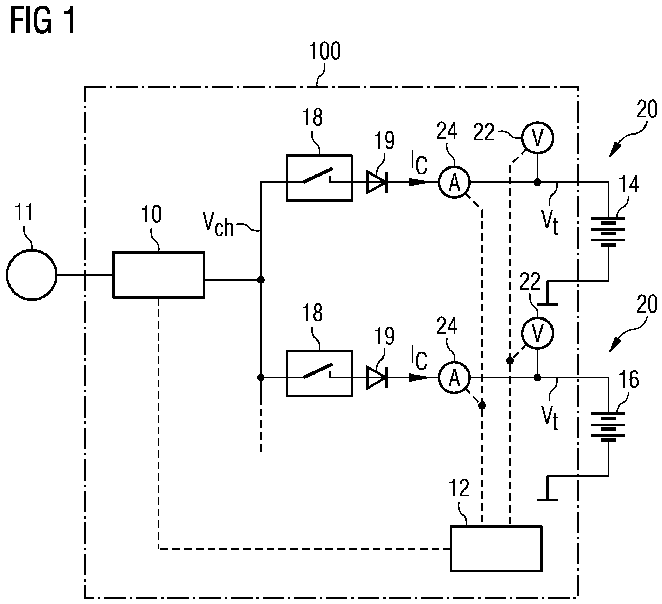

Fig 1 shows the block diagram of an example charging circuit 100 according to an embodiment of the present invention. Batteries may be attached to the charging circuit as required by sets of terminals 20, which may comprise crocodile clips, bolted terminals of conventional type or any other suitable electrical connection which is secure and capable of handling the associated currents and voltages safely.

Two channels are shown, each for connecting a battery 14, 16 and arranged for charging in parallel. More than two batteries may be charged in the same manner by the same charger, by replicating the connections and equipment to provide further channels. A variable voltage regulator 10 is supplied with mains power 11 and operates under control of a controller 12 to generate a variable charge voltage *Vch* for the batteries 14, 16. Typically, the controller is powered from the mains power 11, although other power sources may be used.

Each battery 14, 16 can be connected to, and isolated from, the charge voltage *Vch* by a solid state or electromechanical switch 18 operated under control of the controller 12. The controller 12 also has the facility to monitor the terminal voltage *Vt* of each battery, and charging current *Ic* applied to each battery, respectively by provision of voltage sensors 22 arranged to detect a voltage at terminals 20, and current sensors 24 arranged to measure a charging current flowing to the terminals 20. For each battery, a rectifier 19, typically a solid-state diode, is placed in series with the battery and the voltage regulator 10. In Fig. 1, these diodes are shown between the respective switch 18 and the current sensor 24, however, they could be placed between the voltage regulator 10 and the respective switch 18, between the current sensor 24 and the battery; or even between the battery and ground. These rectifiers prevent each battery from discharging through any of the other batteries, by preventing a negative current *Ic* in any of the batteries.

In operation, mains power source 11, or equivalent, is required. The attachment of one or more batteries 14, 16 is detected by the appropriate voltage sensor(s) monitoring the battery terminal voltages *Vt* at each set of terminals 20, linked to controller 12. The charge voltage *Vch* is set by the variable voltage regulator 10 under control of the controller 12 to match an initial terminal voltage *Vt* of a first battery, being the battery which has a lowest terminal voltage, and this battery is connected to the variable voltage regulator 10 by operation of switches 18 under control of the controller 12. The charger of the present invention now follows an essentially conventional charging method such as described above. As the charge voltage *Vch* rises, along with the terminal voltage *Vt* of the first battery, it will eventually match the terminal voltage *Vt* of a second battery, the one with the second-lowest terminal voltage *Vt,* unless of course no second battery is connected. The controller 12 has access to voltage sensors 22 for all sets of terminals 20, and so can detect terminal voltages for all connected batteries.

At this time, the switch 18 associated with the second battery is closed under control of the controller 12, and constant current charging as described above continues with first and second batteries 14, 16 in parallel. A current sensor 24 is provided for each battery, and each current sensor provides its data to the controller 12. Note that the charge voltage *Vch* is controlled to provide the required constant current to the battery with a maximum charge current *Ic.* The charge voltage *Vch* and the terminal voltage *Vt* on each battery will increase progressively, as the battery is charged.

Assuming that more than two batteries are connected in parallel to the charger of the present invention, the terminal voltages *Vt* of first and second batteries 14, 16 being charged will rise until they equal the terminal voltage *Vt* of a third battery, the one with the third-highest initial terminal voltage.

The switch 18 associated with this third battery is then closed, connecting the third battery in parallel with the first and second batteries.

Charging of these three batteries in parallel will continue, much as the charging of the two batteries in parallel, described above. The terminal voltages *Vt* on the batteries being charged will increase as the batteries are charged. Further batteries can be connected in parallel and charged in a similar manner when their initial terminal voltage is reached by the terminal voltages of the batteries being charged. Control is based on the current *Ic* drawn by the battery drawing the highest current. Control of the current is effected by controlling the charge voltage *Vt.* All batteries share the same charging voltage *Vt* and draw a current appropriate to the applied charging voltage.

When the charging voltage *Vch* reaches the maximum allowable charge voltage, the charge current *Ic* will begin to drop for all the batteries. As each battery current drops below a predefined limit, as detected by the associated current sensor 24 and the controller 12, it is disconnected from the variable voltage regulator 10 by opening the relevant switch 18 under control of controller 12, in order to prevent over-charging.

When the charge current *Ic* for all batteries has dropped below this limit then this current-controlled stage of charging is complete. Constant-voltage charging may begin in a further stage of charging. To achieve this, the charge voltage *Vch* is set to the conventional required level and all batteries are re-connected to the variable charge regulator 10 through switches 18 controlled by controller 12.

Preferably, if the connection of another battery is detected at any time, for example by monitoring of the voltage sensor 22 on that channel, the entire charge sequence must be restarted since the charge state of this newly-connected battery is unknown. This procedure allows batteries to be added or swapped while the system is actively charging the batteries, known as "hot-swapping". It is acceptable for batteries to be disconnected during the constant-voltage phase, and during the constant-current phase.

### Discharging of batteries connected in parallel

According to another aspect of the invention, the controlled discharge of lead-acid batteries connected in parallel is provided.

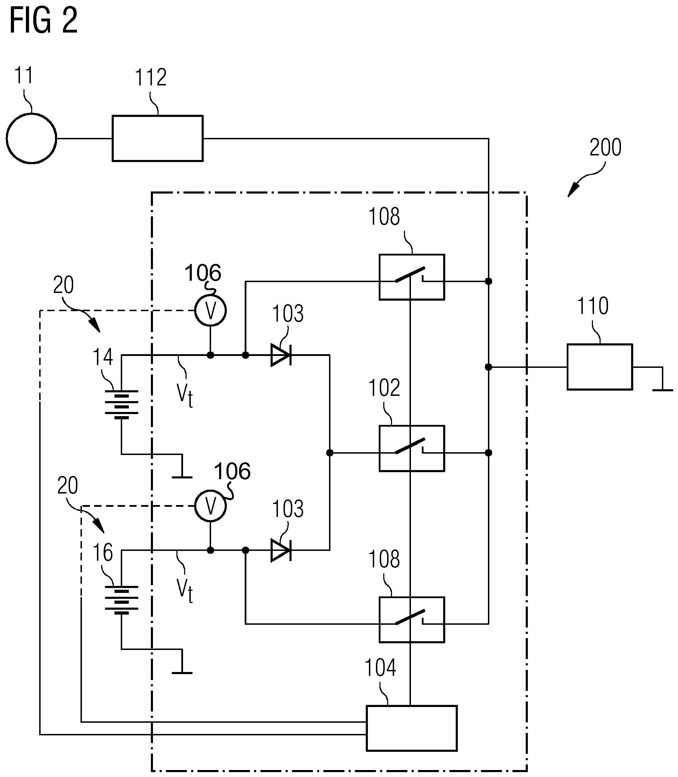

Fig 2 shows a battery back-up circuit which includes a discharge circuit 200 according to an embodiment of the invention. Under normal operational circumstances load 110 is supplied by main load regulator 112 which is supplied by mains power 11. The battery back-up circuit includes provision for connection of at least two batteries 14, 16, to the discharge circuit 200 such that each is connected to a load switch 102 through a respective rectifier 103, which is typically a solid state diode. Load switch 102 is operated under control of a controller 104. A voltage sensor 106 is provided for each battery, and these provide data to the controller 104 indicating the state of the batteries.

In the case of mains power failure, current is supplied to the load 110 though load switch 102 by one or more batteries 14, 16 connected to the discharge circuit 200. The rectifiers 103, for example protective diodes, prevent current flowing between batteries 14, 16 in different states of charge.

According to an aspect of the present invention, each battery 14, 16 can also be connected directly to the load 110 through a direct switch 108, without passing through the rectifier 103.

When the controller 104 detects a mains failure, for example by monitoring the voltage applied to load 110 using a voltage sensor 112, the controller selects a first battery, being the battery 14, 16 with the highest terminal voltage *Vt* as indicated by the associated voltage sensor 106 and connects that battery directly to the load, providing a low loss connection to the load, by closing the associated direct switch 108.

As the selected battery discharges, the terminal voltage *Vt* of that battery will drop until it matches the terminal voltage *Vt* of the battery with the next-highest terminal voltage, if any. In an arrangement such as shown in Fig. 2, where two batteries are in use, this will be the only other battery. In other embodiments where more than two batteries are connected, the controller 104 will monitor all battery terminal voltages *Vt* and select the appropriate battery. The controller then closes the direct switch 108 associated with this second battery, connecting it to the load 110 in parallel with the first battery.

The load 110 is supplied with power from the batteries connected in parallel.

Additional third and further batteries, if present, may be added to the sequence as the terminal voltage *Vt* of the discharging batteries falls to match the their respective terminal voltages.

According to a feature of the present invention, cyclical checks are performed to enable detection of a battery being removed, to assist in swapping of one battery for another. A zero terminal voltage may be taken to indicate that a battery has been removed, and an unusually low terminal voltage may be taken to indicate failure of that battery, which should be disconnected pending replacement.

In an embodiment of the invention, these cyclical checks may be carried out by the controller as follows.
1) For a first time period *T1*, all batteries are connected in parallel to the load through associated direct switches 108.
2) A first battery is disconnected by the controller 104 opening the associated direct switch 108, and its terminal voltage measured using data from the associated voltage sensor 106.
3) The direct switch 108 is closed, and all batteries are again connected in parallel to the load through associated direct switches 108 for a further time period which is preferably equal to *T1,* but is not necessarily so.
4) A second battery is disconnected by the controller 104 opening the associated direct switch 108, and its terminal voltage measured using data from the associated voltage sensor 106.
   Steps (3) and (4) are repeated for each of third and further batteries, if provided
5) Repeat from step (1)

This operation sequence discharges all the batteries in parallel by supplying the load 110, while allowing for the detection of the removal or failure of a battery. If a removal or failure is detected, then the battery in question is removed from the above cyclical check sequence, and discharging continues with the remaining batteries.

Meanwhile, the controller 104 monitors for voltages on all battery terminals 20, so that the connection of a new battery, or re-connection of a previously connected battery, may be detected.

If connection of a new battery is detected, such as by the controller monitoring voltages of battery terminals 20, the battery discharge method described above is restarted from the beginning, with the selection of the battery with the highest terminal voltage *Vt.*

This process facilitates the removal and replacement, or addition, of batteries while the load is being supplied by the parallel connection of batteries. This may be known as "hot swapping".

In one scenario, only one battery is connected to the discharge circuit. In use, as the first battery discharges, another battery is attached to the discharge circuit, with the first one then being removed for recharging.

No attempt should be made to replace a first battery with a second battery until the removal of the first battery has been detected. During some phases of the above-described method, two or more batteries may be connected in parallel. This does not pose a problem if all of those batteries are in a same state of charge. However, if a discharged first battery were removed and replaced with a fully charged second battery one before the controller had detected the removal, then both switches 108 may still be closed and a dangerous current could flow between the two batteries. Once the controller has detected the removal of the first battery, it then opens switch 108 for that battery and connection of a second battery in any charge state is safe due to the action of rectifier 103. When the new battery is detected, the above-described method is restarted and discharging begins with the battery with most charge, detected as being the battery with highest terminal voltage.

Detection of removal or insertion of a battery can be indicated using battery state indicators such as LEDs. Similarly, such indicators may be provided to indicate which batteries are being charged or discharged at any particular moment.

The present invention accordingly provides methods and equipment for connecting batteries in parallel during charging and discharging, such that no danger or damage arises through use of batteries in different states of charge or with different charge storage capacities. By using the methods and equipment of the present invention, batteries may be removed and replaced while the charging or discharging is in progress - known as "hot swapping". The methods and apparatus of the present invention are particularly applicable to lead-acid batteries.

## Claims

1. A method for simultaneously charging a plurality of batteries in parallel by connecting them to a variable charge voltage *Vch,* comprising the steps of:
(a) - generating the variable charge voltage *Vch;*
(b) - monitoring a terminal voltage *Vt* on each of a plurality of sets of battery terminals (20);
(c) - detecting attachment of one or more batteries (14, 16) to respective sets of battery terminals by detecting a respective terminal voltage *Vt* on the respective sets of terminals;
(d) - setting the variable charge voltage *Vch* to match the terminal voltage *Vt* of a first battery, being the battery having a lowest detected terminal voltage;
(e) - connecting the first battery to the variable charge voltage;
(f) - monitoring a charging current *Ic* supplied to the or each connected battery, and controlling the variable charge voltage *Vch* to ensure that the charging current remains below a maximum charge current *Ic* for the or each connected battery to charge the or each connected battery at the same time;
(g) - detecting a time at which the terminal voltage of the battery/ies connected to the variable charge voltage reaches a terminal voltage *Vt* of a further battery with a next-lowest terminal voltage *Vt,*
(h) - connecting said further battery with a next-lowest terminal voltage *Vt* in parallel with the battery/ies connected to the variable charge voltage to charge the or each connected battery and the further battery at the same time;
(i) - maintaining the variable charge voltage *Vch* below a maximum allowable value;
(j) - detecting charging current *Ic* for a battery dropping below a predefined limit, and disconnecting the corresponding battery from the variable charge voltage.

2. A method according to claim 1, wherein steps (f) to (j) are repeated for third and further batteries connected to respective sets of terminals.

3. A method according to claim 1 or claim 2 wherein, once the charge current *Ic* for all batteries has dropped below the predefined limit,
- the variable charge voltage is set to a predefined voltage for constant-voltage charging, and
- all batteries are re-connected to the variable charge voltage.

4. A method according to any preceding claim wherein, at any time during operation of the method after the completion of step (c), another battery is connected to a previously unused set of terminals, and the method returns to step (a).

5. Apparatus for simultaneously charging a plurality of batteries (14, 16) in parallel by connecting them to a common variable charging voltage *Vch,* comprising:
- a variable voltage regulator (10) for supplying the variable charging voltage *Vch*;
- at least two channels, each comprising a set of battery terminals (20) and a controlled switch (18) for selective connection of the sets of battery terminals in parallel to the variable voltage regulator, a respective voltage sensor (22) for monitoring a terminal voltage *Vt* at each associated set of battery terminals, and a current sensor (24) for monitoring a respective charging current *Ic* supplied to each set of battery terminals;
- a controller (12) arranged to receive data from the voltage sensors and current sensors and to control the variable voltage regulator and the controlled switches.

6. Apparatus according to claim 5, wherein each channel is further provided with an indicator arranged to provide an operator with an indication of whether a battery is connected to that channel; and/or whether that battery is charging or discharging.

7. A method for simultaneously discharging a plurality of batteries in parallel, through a load, comprising the steps of:
- (i) connecting a load (110) to the batteries (14, 16) though a load switch (102), with a respective rectifier (103) placed between each battery and the load to prevent current flowing between the batteries
- (ii) monitoring a terminal voltage *Vt* of each battery;
- (iii) selecting a first battery, being a battery (14, 16) with the highest terminal voltage *Vt*;
- (iv) connecting the first battery directly to the load, without an intervening rectifier;
- (v) detecting when the terminal voltage *Vt* of the first battery matches a terminal voltage *Vt* of a second battery with a next-highest terminal voltage;
- (vi) connecting the second battery to the load in parallel with the first battery without an intervening rectifier, thereby supplying the load with power from both the first battery and the second battery connected in parallel.

8. A method according to claim 7 wherein one or more further batteries are added to the parallel arrangement of batteries connected to the load as the terminal voltage *Vt* of the connected batteries falls to match the respective terminal voltages of the further batteries.

9. A method according to claim 7 or claim 8, further comprising the step of cyclically checking the terminal voltages of all connected batteries.

10. A method according to claim 9, wherein the step of cyclically checking is carried out by the following steps:
- (a) for a first time period, all batteries are connected in parallel to the load through associated direct switches (108);
- (b) a battery is disconnected by opening the associated direct switch, and its terminal voltage measured;
- (c) steps (a) and (b) are repeated for each battery;
- (d) the sequence is repeated for all batteries.

11. A method according to claim 10 wherein, in response to a low or zero terminal voltage being measured for one of the batteries, the battery in question is disconnected and removed from the above cyclical check sequence.

12. A method according to any of claims 1-4, further comprising monitoring for voltages on all available battery terminals, whereby connection of a new battery, or re-connection of a previously connected battery, may be detected.

13. A method according to claim 12 wherein, in response to the detection of connection of a battery, the method is restarted from step (i).

14. A method according to any of claims 7-11 further comprising monitoring for voltages on all available battery terminals, whereby connection of a new battery, or re-connection of a previously connected battery, may be detected.

15. A method according to claim 14 wherein, in response to the detection of connection of a battery, the method is restarted from step (i).

16. A discharge circuit (200) for simultaneously discharging a plurality of batteries in parallel, through a load (110), comprising:
- at least two sets (20) of battery terminals, each connected to the load through a load switch (102) and a respective intermediate rectifier (103);
- respective voltage sensors (106) arranged to detect a terminal voltage *Vt* at each of the sets of battery terminals;
- respective direct switches (108) connecting each set of battery terminals to the load with no intermediate rectifier;
- a controller (104) arranged to receive data from the voltage sensors and to control operation of the direct switches in accordance with the detected terminal voltages.

17. A discharge circuit according to claim 16, further comprising indicators each showing whether a battery is connected to that channel; and/or whether that battery is charging or discharging.

## Patentansprüche

1. Verfahren zum gleichzeitigen Laden mehrerer Batterien parallel durch Anschließen derselben an eine variable Ladespannung *Vch,* die folgenden Schritte umfassend:
(a) - Erzeugen der variablen Ladespannung *Vch*;
(b) - Überwachen einer Klemmenspannung *Vt* an jedem von mehreren Sätzen von Batterieklemmen (20);
(c) - Erkennen der Anbringung einer oder mehrerer Batterien (14, 16) an jeweiligen Sätzen von Batterieklemmen durch Erkennen einer jeweiligen Klemmenspannung *Vt* an den jeweiligen Sätzen von Klemmen;
(d) - Einstellen der variablen Ladespannung *Vch,* so dass sie mit der Klemmenspannung *Vt* einer ersten Batterie übereinstimmt, welche die Batterie mit einer niedrigsten erkannten Klemmenspannung ist;
(e) - Anschließen der ersten Batterie an die variable Ladespannung;
(f) - Überwachen eines Ladestroms *Ic,* welcher der oder jeder angeschlossenen Batterie zugeführt wird, und Steuern der variablen Ladespannung *Vch,* um sicherzustellen, dass der Ladestrom für die oder jede angeschlossene Batterie unter einem maximalen Ladestrom *Ic* bleibt, um die oder jede angeschlossene Batterie gleichzeitig zu laden;
(g) - Erkennen eines Zeitpunkts, zu dem die Klemmenspannung der Batterie(n), die an die variablen Ladespannung angeschlossen ist (sind), eine Klemmenspannung *Vt* einer weiteren Batterie mit einer nächstniedrigsten Klemmenspannung *Vt* erreicht;
(h) - Schalten dieser weiteren Batterie mit einer nächstniedrigsten Klemmenspannung *Vt* parallel zu der (den) Batterie(n), die an die variablen Ladespannung angeschlossen ist (sind), um die oder jede angeschlossene Batterie und die weitere Batterie gleichzeitig zu laden;
(i) - Halten der variablen Ladespannung *Vch* unter einem maximalen zulässigen Wert;
(j) - Erkennen, wenn ein Ladestrom *Ic* für eine Batterie unter einen vordefinierten Grenzwert absinkt, und Trennen der entsprechenden Batterie von der variablen Ladespannung.

2. Verfahren nach Anspruch 1, wobei die Schritte (f) bis (j) für eine dritte und weitere Batterien, die an jeweilige Sätze von Klemmen angeschlossen sind, wiederholt werden.

3. Verfahren nach Anspruch 1 oder Anspruch 2, wobei, nachdem der Ladestrom *Ic* für alle Batterien unter den vordefinierten Grenzwert abgesunken ist,
- die variable Ladespannung auf eine vordefinierte Spannung für Konstantspannungsladung eingestellt wird, und
- alle Batterien wieder an die variable Ladespannung angeschlossen werden.

4. Verfahren nach einem der vorhergehenden Ansprüche, wobei zu einem beliebigen Zeitpunkt während der Durchführung des Verfahrens nach der Beendigung von Schritt (c) eine andere Batterie an einen zuvor nicht verwendeten Satz von Klemmen angeschlossen wird und das Verfahren zu Schritt (a) zurückkehrt.

5. Vorrichtung zum gleichzeitigen Laden mehrerer Batterien (14, 16) parallel durch Anschließen derselben an eine gemeinsame variable Ladespannung *Vch,* umfassend:
- einen einstellbaren Spannungsregler (10) zum Zuführen der variablen Ladespannung *Vch*;
- wenigstens zwei Kanäle, die jeweils einen Satz von Batterieklemmen (20) und einen gesteuerten Schalter (18) zum selektiven Schalten der Sätze von Batterieklemmen parallel zu dem einstellbaren Spannungsregler, einen jeweiligen Spannungssensor (22) zum Überwachen einer Klemmenspannung *Vt* an dem jeweiligen zugeordneten Satz von Batterieklemmen und einen Stromsensor (24) zum Überwachen eines jeweiligen Ladestroms *Ic,* der dem jeweiligen Satz von Batterieklemmen zugeführt wird, umfassen;
- eine Steuereinheit (12), die dafür ausgelegt ist, Daten von den Spannungssensoren und Stromsensoren zu empfangen und den einstellbaren Spannungsregler und die gesteuerten Schalter zu steuern.

6. Vorrichtung nach Anspruch 5, wobei jeder Kanal ferner mit einem Anzeiger versehen ist, der dafür ausgelegt ist, einem Bediener eine Anzeige zur Verfügung zu stellen, ob eine Batterie an den betreffenden Kanal angeschlossen ist; und/oder ob diese Batterie geladen oder entladen wird.

7. Verfahren zum gleichzeitigen Entladen mehrerer Batterien parallel über eine Last, die folgenden Schritte umfassend:
- (i) Anschließen einer Last (110) an die Batterien (14, 16) über einen Lastschalter (102), wobei zwischen jeder Batterie und der Last ein jeweiliger Gleichrichter (103) angeordnet ist, um einen Stromfluss zwischen den Batterien zu verhindern;
- (ii) Überwachen einer Klemmenspannung *Vt* jeder Batterie;
- (iii) Auswählen einer ersten Batterie, welche eine Batterie (14, 16) mit der höchsten Klemmenspannung *Vt* ist;
- (iv) Anschließen der ersten Batterie direkt an die Last, ohne einen zwischengeschalteten Gleichrichter;
- (v) Erkennen, wenn die Klemmenspannung *Vt* der ersten Batterie mit einer Klemmenspannung *Vt* einer zweiten Batterie mit einer nächsthöchsten Klemmenspannung übereinstimmt;
- (vi) Anschließen der zweiten Batterie an die Last parallel zu der ersten Batterie ohne einen zwischengeschalteten Gleichrichter, dadurch Versorgen der Last mit Leistung sowohl von der ersten Batterie als auch der zweiten Batterie, die parallelgeschaltet sind.

8. Verfahren nach Anspruch 7, wobei eine oder mehrere weitere Batterien zu der an die Last angeschlossenen parallelen Anordnung von Batterien hinzugefügt werden, wenn die Klemmspannung *Vt* der angeschlossenen Batterien so weit sinkt, dass sie mit den jeweiligen Klemmenspannungen der weiteren Batterien übereinstimmt.

9. Verfahren nach Anspruch 7 oder Anspruch 8, welches ferner den Schritt des zyklischen Prüfens der Klemmenspannungen aller angeschlossenen Batterien umfasst.

10. Verfahren nach Anspruch 9, wobei der Schritt des zyklischen Prüfens durch die folgenden Schritte ausgeführt wird:
- (a) für einen ersten Zeitraum werden alle Batterien durch zugeordnete Direktschalter (108) parallel zu der Last geschaltet;
- (b) eine Batterie wird durch Öffnen des zugeordneten Direktschalters abgetrennt, und ihre Klemmenspannung wird gemessen;
- (c) die Schritte (a) und (b) werden für jede Batterie wiederholt;
- (d) die Schrittfolge wird für alle Batterien wiederholt.

11. Verfahren nach Anspruch 10, wobei in Reaktion darauf, dass für eine der Batterien eine niedrig Klemmenspannung oder Klemmenspannung null gemessen wird, die betreffende Batterie abgetrennt und aus der obigen zyklischen Prüfungsfolge entfernt wird.

12. Verfahren nach einem der Ansprüche 1-4, welches ferner das Überwachen im Hinblick auf Spannungen an allen verfügbaren Batterieklemmen umfasst, wodurch das Anschließen einer neuen Batterie oder das Wiederanschließen einer schon zuvor angeschlossenen Batterie erkannt werden kann.

13. Verfahren nach Anspruch 12, wobei in Reaktion auf das Erkennen des Anschließens einer Batterie das Verfahren von Schritt (i) ab neu gestartet wird.

14. Verfahren nach einem der Ansprüche 7-11, welches ferner das Überwachen im Hinblick auf Spannungen an allen verfügbaren Batterieklemmen umfasst, wodurch das Anschließen einer neuen Batterie oder das Wiederanschließen einer schon zuvor angeschlossenen Batterie erkannt werden kann.

15. Verfahren nach Anspruch 14, wobei in Reaktion auf das Erkennen des Anschließens einer Batterie das Verfahren von Schritt (i) ab neu gestartet wird.

16. Entladeschaltung (200) zum gleichzeitigen Entladen mehrerer Batterien parallel über eine Last (110), umfassend:
- wenigstens zwei Sätze (20) von Batterieklemmen, die jeweils über einen Lastschalter (102) und einen jeweiligen zwischengeschalteten Gleichrichter (103) an die Last angeschlossen sind;
- jeweilige Spannungssensoren (106), die dafür ausgelegt sind, eine Klemmenspannung *Vt* an jedem der Sätze von Batterieklemmen zu erkennen;
- jeweilige Direktschalter (108), die jeden Satz von Batterieklemmen ohne einen zwischengeschalteten Gleichrichter an die Last anschließen;
- eine Steuereinheit (104), die dafür ausgelegt ist, Daten von den Spannungssensoren zu empfangen und die Betätigung der Direktschalter entsprechend den erkannten Klemmenspannungen zu steuern.

17. Entladeschaltung nach Anspruch 16, welche ferner Anzeiger umfasst, die jeweils zeigen, ob eine Batterie an den betreffenden Kanal angeschlossen ist; und/oder ob diese Batterie geladen oder entladen wird.

## Revendications

1. Procédé permettant de charger simultanément une pluralité de batteries montées en parallèle en les branchant sur une tension de charge variable *Vch,* comprenant les étapes consistant :
(a) - à produire la tension de charge variable *vch* ;
(b) - à surveiller une tension aux bornes *Vt* sur chaque jeu d'une pluralité de jeux de bornes (20) de batterie ;
(c) - à détecter la fixation d'une ou de plusieurs batteries (14, 16) à des jeux respectifs de bornes de batterie en détectant une tension aux bornes *Vt* respective sur les jeux respectifs de bornes ;
(d) - à régler la tension de charge variable *Vch* pour qu'elle corresponde à la tension aux bornes *Vt* d'une première batterie, celle-ci étant la batterie présentant la plus basse tension détectée aux bornes ;
(e) - à brancher la première batterie sur la tension de charge variable ;
(f) - à surveiller un courant de charge *Ic* alimentant la ou chaque batterie branchée et à réguler la tension de charge variable *Vch* afin de garantir que le courant de charge reste inférieur à un courant de charge *Ic* maximal pour la ou pour chaque batterie branchée en vue de charger en même temps la ou chaque batterie branchée ;
(g) - à détecter un moment auquel la tension aux bornes de la ou des batteries branchées sur la tension de charge variable atteint une tension aux bornes *Vt* d'une autre batterie présentant la tension aux bornes *Vt* suivante la plus basse ;
(h) - à brancher ladite autre batterie présentant la tension aux bornes *Vt* suivante la plus basse en parallèle avec la ou les batteries branchées sur la tension de charge variable en vue de charger en même temps la ou chaque batterie branchée et l'autre batterie ;
(i) - à maintenir la tension de charge variable *Vch* sous une valeur maximale admissible ;
(j) - à détecter le courant de charge *Ic* pour déceler une chute de batterie en dessous d'une limite prédéfinie et à débrancher la batterie correspondante de la tension de charge variable.

2. Procédé selon la revendication 1, dans lequel les étapes (f) à (j) sont répétées pour la troisième batterie et les autres batteries reliées à des jeux respectifs de bornes.

3. Procédé selon la revendication 1 ou la revendication 2 dans lequel, une fois que le courant de charge *Ic* a chuté pour toutes les batteries sous la limite prédéfinie,
- la tension de charge variable est réglée sur une tension prédéfinie en vue d'une charge à tension constante, et
- toutes les batteries sont rebranchées sur la tension de charge variable.

4. Procédé selon l'une quelconque des revendications précédentes dans lequel, à n'importe quel moment pendant l'exécution du procédé après l'achèvement de l'étape (c), une autre batterie est raccordée à un jeu de bornes précédemment inutilisé, et le procédé revient à l'étape (a).

5. Appareil permettant de charger simultanément une pluralité de batteries (14, 16) montées en parallèle en les branchant sur une tension de charge variable *Vch* commune, comprenant :
- un régulateur (10) de tension variable pour fournir la tension de charge variable *Vch* ;
- au moins deux canaux, chacun comprenant un jeu de bornes (20) de batterie et un interrupteur commandé (18) en vue du raccordement sélectif, au régulateur de tension variable, des jeux de bornes de batterie montées en parallèle, un détecteur de tension (22) respectif pour surveiller une tension aux bornes *Vt* au niveau de chaque jeu associé de bornes de batterie et un détecteur de courant (24) pour surveiller un courant de charge *Ic* respectif fourni à chaque jeu de bornes de batterie ;
- un dispositif de commande (12) agencé pour recevoir des données des détecteurs de tension et des détecteurs de courant, et pour commander le régulateur de tension variable et les interrupteurs commandés.

6. Appareil selon la revendication 5, dans lequel chaque canal est par ailleurs doté d'un indicateur agencé pour fournir à un opérateur une indication sur le fait de savoir si une batterie est raccordée à ce canal et/ou si cette batterie est en train de se charger ou de se décharger.

7. Procédé permettant de décharger simultanément une pluralité de batteries montées en parallèle, par le biais d'une charge, comprenant les étapes consistant :
- (i) à raccorder une charge (110) aux batteries (14, 16) par le biais d'un interrupteur (102) de charge, un redresseur (103) respectif étant monté entre chaque batterie et la charge pour empêcher le courant de circuler entre les batteries ;
- (ii) à surveiller une tension *Vt* aux bornes de chaque batterie ;
- (iii) à sélectionner une première batterie, celle-ci étant une batterie (14, 16) présentant la tension aux bornes *Vt* la plus élevée ;
- (iv) à raccorder la première batterie à la charge, sans redresseur intermédiaire ;
- (v) à détecter le moment où la tension *Vt* aux bornes de la première batterie correspond à une tension *Vt* aux bornes d'une seconde batterie présentant la tension aux bornes suivante la plus élevée ;
- (vi) à raccorder la seconde batterie à la charge en parallèle avec la première batterie sans redresseur intermédiaire, ce qui alimente la charge en courant depuis à la fois la première batterie et la seconde batterie raccordées en parallèle.

8. Procédé selon la revendication 7 dans lequel une ou plusieurs autres batteries sont ajoutées au montage parallèle de batteries raccordées à la charge à mesure que la tension *Vt* aux bornes des batteries raccordées tombe pour correspondre aux tensions respectives aux bornes des autres batteries.

9. Procédé selon la revendication 7 ou la revendication 8, comprenant par ailleurs l'étape consistant à vérifier cycliquement les tensions aux bornes de toutes les batteries raccordées.

10. Procédé selon la revendication 9, dans lequel l'étape de vérification cyclique est exécutée au moyen des étapes suivante :
- (a) pendant un premier laps de temps, toutes les batteries sont raccordées en parallèle à la charge par le biais d'interrupteurs directs (108) associés ;
- (b) on débranche une batterie en ouvrant le commutateur direct associé et on mesure sa tension aux bornes ;
- (c) les étapes (a) et (b) sont répétées pour chaque batterie ;
- (d) la séquence est répétée pour toutes les batteries.

11. Procédé selon la revendication 10 dans lequel, en réaction à la mesure d'une tension basse ou nulle aux bornes de l'une des batteries, la batterie en question est débranchée et retirée de la séquence ci-dessus de vérification cyclique.

12. Procédé selon l'une quelconque des revendications 1-4, consistant par ailleurs à surveiller toutes les bornes de batterie disponibles en vue d'y détecter des tensions, le branchement d'une nouvelle batterie ou le rebranchement d'une batterie précédemment branchée pouvant être détecté de la sorte.

13. Procédé selon la revendication 12 dans lequel, en réaction à la détection du branchement d'une batterie, on relance le procédé à l'étape (i).

14. Procédé selon l'une quelconque des revendications 7-11 consistant par ailleurs à surveiller toutes les bornes de batterie disponibles en vue d'y détecter des tensions, le branchement d'une nouvelle batterie ou le rebranchement d'une batterie précédemment branchée pouvant être détecté de la sorte.

15. Procédé selon la revendication 14 dans lequel, en réaction à la détection du branchement d'une batterie, on relance le procédé à l'étape (i).

16. Circuit de décharge (200) permettant de décharger simultanément une pluralité de batteries montées en parallèle, par le biais d'une charge (110), comprenant :
- au moins deux jeux (20) de bornes de batterie, reliés chacun à la charge par un interrupteur (102) de charge et un redresseur intermédiaire (103) respectif ;
- des détecteurs de tension (106) respectifs agencés pour détecter une tension aux bornes *Vt* au niveau de chacun des jeux de bornes de batterie ;
- des interrupteurs directs (108) respectifs reliant chaque jeu de bornes de batterie à la charge sans redresseur intermédiaire ;
- un dispositif de commande (104) agencé pour recevoir des données des détecteurs de tension et pour commander le fonctionnement des interrupteurs directs conformément aux tensions détectées aux bornes.

17. Circuit de décharge selon la revendication 16, comprenant par ailleurs des indicateurs montrant chacun si une batterie est raccordée à ce canal et/ou si cette batterie est en train de se charger ou de se décharger.
